# EUROPÄISCHE PATENTSCHRIFT

(11) **EP 1 532 494 B1**
(45) Veröffentlichungstag und Bekanntmachung des Hinweises auf die Patenterteilung: **28.01.2009**
(21) Anmeldenummer: 03794897.3
(22) Anmeldetag: 20.08.2003
(51) Int. Cl.: G05B 9/02, G05B 15/02

(54) **SICHERHEITSSTEUERUNG ZUM FEHLERSICHEREN STEUERN VON SICHERHEITSKRITISCHEN PROZESSEN SOWIE VERFAHREN ZUM AUFSPIELEN EINES NEUEN BETRIEBSPROGRAMMS AUF EINE SOLCHE**
SAFETY CONTROL SYSTEM FOR FAIL-SAFE CONTROL OF SAFETY-CRITICAL PROCESSES AND METHOD FOR RUNNING A NEW OPERATING PROGRAM THEREIN
SYSTEME DE COMMANDE DE SECURITE CONNU POUR COMMANDER, SANS ERREUR, DES PROCESSUS CRITIQUES EN TERMES DE SECURITE ET PROCEDE PERMETTANT DE TELECHARGER UN NOUVEAU PROGRAMME D'EXPLOITATION VERS LEDIT SYSTEME

(30) Priorität: 28.08.2002 DE 10240584
(43) Veröffentlichungstag der Anmeldung: 25.05.2005
(73) Patentinhaber: Pilz GmbH & Co. KG, 73760 Ostfildern (DE)
(72) Erfinder: KLOPFER, Johannes, 73257 Köngen (DE); WOHNHAAS, Klaus, 70736 Fellbach (DE)
(74) Vertreter: Duhme, Torsten
(86) Internationale Anmeldenummer: PCT/EP2003/009196
(87) Internationale Veröffentlichungsnummer: WO 2004/025382

(56) Entgegenhaltungen:
- EP-A- 1 193 576
- WO-A-98/44399
- DE-A- 19 953 837
- US-A- 5 800 473
- US-A- 5 966 301

## Beschreibung

Die vorliegende Erfindung betrifft eine Sicherheitssteuerung zum fehlersicheren Steuern von sicherheitskritischen Prozessen, insbesondere zum fehlersicheren Abschalten einer Maschine oder Maschinenanlage, mit einem Eingangsmodul zum automatischen Einlesen von Prozeßsignalen, mit einem fehlersicheren Signalverarbeitungsmodul zum automatischen Verarbeiten der Prozeßsignale und mit einem fehlersicheren Ausgangsmodul, das in Abhängigkeit von dem Signalverarbeitungsmodul Steuersignale erzeugt, wobei das Signalverarbeitungsmodul zumindest einen programmierbaren Prozessor und zumindest einen ersten Festspeicher beinhaltet, in dem ein aktuelles Betriebsprogramm für den Prozessor nicht-flüchtig abgespeichert ist.

Die Erfindung betrifft ferner ein Verfahren zum Aufspielen eines neuen Betriebsprogramms auf eine solche Sicherheitssteuerung sowie ein entsprechendes Betriebsprogramm.

Eine Sicherheitssteuerung der vorgenannten Art ist beispielsweise aus der WO 98/44399 bekannt.

Eine Sicherheitssteuerung im Sinne der vorliegenden Erfindung ist ein Gerät oder eine Kombination von miteinander verbundenen Geräten, die Prozeßsignale von Sensoren aufnehmen und daraus durch logische Verknüpfungen und eventuell weitere Signal- oder Datenverarbeitungsschritte Ausgangssignale erzeugen. Die Ausgangssignale werden Aktuatoren zugeführt werden, die gezielte Aktionen oder Reaktionen in der Umgebung bewirken. Ein bevorzugtes Anwendungsgebiet für Sicherheitssteuerungen ist im Bereich der Maschinensicherheit die Überwachung von Not-Aus-Tastern, Zwei-Hand-Steuerungen, Schutztüren, Lichtgittern, Stillstandswächtern und dergleichen. Derartige Sensoren werden verwendet, um beispielsweise eine Maschine, von der im Betrieb eine Gefahr für Bedienpersonal ausgeht, abzusichern. Beim Öffnen der Schutztür oder beim Betätigen des Not-Aus-Tasters wird ein Prozeßsignal erzeugt, das der Sicherheitssteuerung als Eingangssignal zugeführt ist. In Reaktion auf das Eingangssignal schaltet die Sicherheitssteuerung mit Hilfe eines angeschlossenen Aktuators den gefahrbringenden Teil der Maschine fehlersicher ab.

Charakteristisch an einer Sicherheitssteuerung ist im Gegensatz zu einer "normalen" Steuerung, daß die Sicherheitssteuerung stets einen sicheren Zustand des gesteuerten Prozesses, beispielsweise also der gefahrbringenden Maschine, gewährleisten muß. Dies gilt selbst dann, wenn innerhalb der Sicherheitssteuerung oder bei einem mit ihr verbundenen Gerät eine Fehlfunktion auftritt. Bei Sicherheitssteuerungen werden daher extrem hohe Anforderungen an die Eigenfehlersicherheit gestellt, was einen erheblichen Zusatzaufwand bei der Entwicklung und Herstellung zur Folge hat. In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muß dabei vorgegebene Sicherheitsstandards einhalten, die beispielsweise in der europäischen Norm EN 954-1 definiert sind. Die vorliegende Erfindung trägt diesen Besonderheiten Rechnung. Der Begriff "Sicherheitssteuerung" bezieht sich hier daher ausschließlich auf ein Gerät oder eine Kombination von Geräten, die zumindest nach der Kategorie 3 der genannten europäischen Norm für die Steuerung von Maschinen, Maschinenanlagen und dergleichen zugelassen sind.

Eine programmierbare Sicherheitssteuerung bietet dem Anwender die Möglichkeit, die logischen Verknüpfungen der Eingangssignale mit Hilfe einer Software, nämlich dem sogenannten Anwenderprogramm; seinen Bedürfnissen entsprechend individuell festzulegen. Eine programmierbare Sicherheitssteuerung ersetzt damit die früher übliche Verdrahtung der einzelnen Sensoren mit Hilfe von Logik-Schaltgliedern. Um diese Funktion erfüllen zu können, besitzt eine programmierbare Sicherheitssteuerung ein vom Anwenderprogramm getrenntes Betriebsprogramm, das den grundsätzlichen Funktionsumfang der Sicherheitssteuerung bestimmt. Das Betriebsprogramm beinhaltet insbesondere Programmcode, mit dem die Hardwarekomponenten der Sicherheitssteuerung unmittelbar angesprochen und damit "zum Leben erweckt" werden.

Darüber hinaus sind in dem Betriebsprogramm in aller Regel auch sicherheitstechnische Steuerregeln implementiert, die der Anwender mit seinem Anwenderprogramm als vorbereitete Funktionsmodule aufrufen und mit aktuellen Eingangs- und Ausgangssignalen parametrieren kann. Beispielsweise sind in dem Betriebsprogramm vorbereitete Funktionsmodule zum fehlersicheren Auswerten eines zweikanaligen Not-Aus-Tasters oder einer zweikanaligen Schutztür enthalten. Im Anwenderprogramm kann der Anwender nur noch festlegen, wie die vorbereiteten Module, hier also der Not-Aus-Taster und die Schutztür, logisch miteinander verknüpft sein sollen.

Auf das Betriebsprogramm hat der Anwender aus Sicherheitsgründen keinen Zugriff, d.h. er kann das Betriebsprogramm weder austauschen noch verändern. In der Fachterminologie wird das Betriebsprogramm häufig auch als *Firmware* bezeichnet.

In der eingangs genannten WO 98/44399 ist ein Verfahren zum Programmieren einer Sicherheitssteuerung beschrieben, wobei die sicherheitstechnischen Steuerregeln in Form von Funktionsmodulen in der Sicherheitssteuerung abgelegt sind. Der Anwender kann die Funktionsmodule mit seinem Anwenderprogramm auswählen, parametrieren und logisch miteinander verknüpfen. Hierzu dient ein Programmiergerät, mit dem die Befehle zum Auswählen, Parametrieren und Verknüpfen der Funktionsmodule an die Sicherheitssteuerung übertragen werden. Wie zuvor erläutert, hat der Anwender jedoch keine Möglichkeit, auf die implementierten sicherheitstechnischen Steuerregeln in den Funktionsmodulen zuzugreifen, d.h. er kann sie weder austauschen noch verändern.

Der gesperrte Zugriff auf das Betriebsprogramm entspricht der gefestigten Praxis bei Sicherheitssteuerungen, da das Betriebsprogramm in Kombination mit der Hardware der Sicherheitssteuerung der Zulassung durch die zuständigen Aufsichtsbehörden unterliegt. Wenn der Anwender in die Kombination von Hardware und Betriebsprogramm eingreifen könnte, kann der Hersteller der Sicherheitssteuerung die Fehlersicherheit nach gefestigter Überzeugung nicht in der erforderlichen Konsequenz gewährleisten.

Die gefestigte Praxis führt allerdings zu dem Nachteil, daß eine Funktionsänderung im Bereich des Betriebsprogramms der Sicherheitssteuerung nur durch den Hersteller der Sicherheitssteuerung selbst vorgenommen werden kann. Wenn eine Funktionsänderung oder ein sonstiger Eingriff in das Betriebsprogramm gewünscht ist, muß der Anwender die Sicherheitssteuerung entweder zum Hersteller einschicken oder vom Hersteller sachkundiges und zugelassenes Servicepersonal anfordern. Dies bedeutet einen Aufwand, der umständlich und teuer ist und sich zudem auch nachteilig auf Stillstandszeiten einer Maschinenanlage auswirken kann, in der die Sicherheitssteuerung eingesetzt ist.

Außerhalb der Sicherheitstechnik, beispielsweise also bei handelsüblichen Personalcomputern, ist es gängige Praxis, daß ein Anwender Softwareaktualisierungen in eigener Verantwortung vornehmen kann, indem er eine neue Software vom Hersteller bezieht und gegebenenfalls nach Anleitung auf den Personalcomputer aufspielt. Dies gilt auch für sogenannte Betriebssysteme, die ein Betriebsprogramm im Sinne der vorliegenden Erfindung darstellen. Nach gängiger Überzeugung ist ein solches Vorgehen für sicherheitstechnische Anwendungen jedoch undenkbar, da dem Hersteller der Sicherheitssteuerung hierdurch die alleinige Kontrolle über die Kombination von Hardware und Betriebsprogramm entzogen wäre. Infolge dessen wären nicht-überprüfte Kombinationen von Hardware und Betriebsprogramme möglich, was ein Sicherheitsrisiko bedeutet.

Aus EP 1 193 576 A2 ist eine Prozeßsteuerung mit abgesetzten, dreifach redundanten Feldeinheiten bekannt, die den Download eines aktualisierten Programms in jede dieser abgesetzten Einheiten ermöglicht, ohne daß der kontinuierlich gesteuerte Prozeß beeinflußt wird. Es handelt sich hier allerdings nicht um eine Sicherheitssteuerung der eingangs genannten Art.

Es ist eine Aufgabe der vorliegenden Erfindung, eine Sicherheitssteuerung der eingangs genannten Art anzugeben, die eine flexiblere und kostengünstigere Anpassung an Kundenwünsche ermöglicht.

Diese Aufgabe wird durch eine Sicherheitssteuerung der eingangs genannten Art gelöst, die eine Downloadeinrichtung zum Übernehmen eines neuen Betriebsprogramms und einen zweiten Festspeicher aufweist, in dem eine erste Hardwareinformation abgespeichert ist, die zumindest für das Signalverarbeitungsmodul charakteristisch ist, wobei das neue Betriebsprogramm eine zweite Hardwareinformation beinhaltet, die für eine minimal erforderliche Hardwarekonfiguration charakteristisch ist, und wobei die Downloadeinrichtung die Übernahme des neuen Betriebsprogramms in Abhängigkeit von einer Freigabeinformation, die die erste und zweite Hardwareinformation beinhaltet, fehlersicher freigibt oder unterbindet.

Die Aufgabe wird ferner durch ein Verfahren zum Aufspielen eines neuen Betriebsprogramms auf eine Sicherheitssteuerung der eingangs genannten Art gelöst, mit den Schritten:
- Bereitstellen der Sicherheitssteuerung mit einem ersten Festspeicher, in dem ein aktuelles Betriebsprogramm abgespeichert ist,
- Bereitstellen einer für die Sicherheitssteuerung charakteristischen ersten Hardwareinformation in einem zweiten Festspeicher der Sicherheitssteuerung,
- Bereitstellen eines neuen Betriebsprogramms,
- Bereitstellen einer zweiten Hardwareinformation in dem neuen Betriebsprogramm, wobei die zweite Hardwareinformation für eine minimal erforderliche Hardwareanforderung an das neue Betriebsprogramm charakteristisch ist, und
- Übernehmen des neuen Betriebsprogramms in den ersten Festspeicher in Abhängigkeit von einer Freigabeinformation, die die erste und zweite Hardwareinformation beinhaltet.

Mit der beschriebenen Sicherheitssteuerung und dem entsprechenden Verfahren ist es erstmals für den Bereich der Maschinensicherheit möglich, daß ein Anwender ein neues Betriebsprogramm, d.h. eine neue Firmware, selbständig auf eine vorhandene Sicherheitssteuerung aufspielt, d.h. übernimmt. Die vorliegende Erfindung löst sich damit von dem bislang ehernen Grundsatz, daß Handlungen, die sicherheitstechnische Steuerregeln betreffen, allein vom Hersteller vorgenommen werden dürfen, der die Verantwortung gegenüber den Aufsichtsbehörden trägt.

Die Abkehr von der bisherigen Praxis ist aufgrund der überraschenden Erkenntnis möglich, daß die Kontrolle des Herstellers über die Sicherheitssteuerung mit Hilfe einer speziellen bzw. zusätzlichen Freigabeinformation weiterhin lückenlos aufrechterhalten werden kann. Die Auswahl und Definition der Freigabeinformation verbleibt in der Hand des Herstellers. Dadurch, daß ein Aufspielen des neuen Betriebsprogramms in Abhängigkeit von der Freigabeinformation fehlersicher und damit "automatisch" bzw. "maschinell" unterbunden wird, kann der Hersteller der Sicherheitssteuerung dann die Anzahl der möglichen Kombinationen von Hardware und Betriebsprogramm auf Anwenderseite eingrenzen. Es genügt, die Downloadeinrichtung so auszugestalten, daß sie eine Übernahme des neuen Betriebsprogramms nur dann zuläßt, wenn sie anhand der erforderlichen Freigabeinformation erkennt, daß die Übernahme auf der vorhandenen Hardwareplattform vom Hersteller freigegeben ist. Die Überprüfung der Freigabeinformation, die beispielsweise eine Liste zulässiger Hardwareplattformen beinhaltet, kann mit an sich bekannten und im Bereich der Maschinensicherheit üblichen programmtechnischen oder schaltungstechnischen Maßnahmen fehlersicher ausgestaltet werden, insbesondere durch zweikanalige, bevorzugt diversitäre Überprüfung der Freigabeinformation und/oder zweikanalige und bevorzugt diversitäre Sperrung der Übernahme.

Mit anderen Worten unterbindet die Freigabeeinrichtung also das Abspeichern des neuen Betriebsprogramms in Abhängigkeit von einem Vergleich der ersten und der zweiten Hardwareinformation. Dadurch kann der Hersteller der Sicherheitssteuerung kontrollieren, dass ein neues Betriebsprogramm nur auf einer Hardwareplattform betrieben wird, die von ihm getestete, minimale Voraussetzungen erfüllt. Der Hersteller der Sicherheitssteuerung kann damit die Kombinationsvielfalt von Hardwareplattformen und Betriebsprogrammen auf Anwenderseite einschränken.

Die neue Sicherheitssteuerung besitzt aufgrund der Möglichkeit einer Softwareaktualisierung des Betriebsprogramms durch den Anwender eine wesentlich höhere Flexibilität bei der logistischen Betreuung. Produktions- und Servicekosten auf Herstellerseite lassen sich reduzieren. Andererseits lassen sich Stillstandszeiten einer Maschinenanlage bei einer Modifikation der Sicherheitssteuerung auf Betriebsprogrammebene verringern, da nicht erst auf einen Servicetechniker des Herstellers gewartet werden muß. Darüber hinaus erhält der Anwender eine größere Einsatzbreite für eine vorhandene Sicherheitssteuerung, da er diese durch Aufspielen eines neuen Betriebsprogramms mit einem neuen Funktionsumfang ausrüsten kann. Diese Vorteile sind jedoch nicht mit Einbußen bei der Sicherheit verbunden, da der Anwender nach wie vor keinen Zugriff auf die internen sicherheitstechnischen Steuerregeln erhält.

Die genannte Aufgabe ist daher vollständig gelöst.

In einer Ausgestaltung der Erfindung ist die Freigabeinformation zumindest teilweise in dem neuen Betriebsprogramm maschinenlesbar integriert.

Diese Ausgestaltung ist eine besonders einfache und gleichzeitig für den Anwender sehr komfortable Möglichkeit, um die Freigabeinformation fehlersicher zu auszuwerten und die Übernahme des neuen Betriebsprogramms in Abhängigkeit davon fehlersicher durchzuführen oder zu sperren. Außerdem lassen sich Manipulationen mit einer zumindest teilweise integrierten Freigabefunktion noch besser unterbinden, was zu einer erhöhten Sicherheit führt.

In einer weiteren Ausgestaltung beinhaltet die Freigabeinformation eine erste und eine zweite sequentielle Versionsinformation, wobei die erste sequentielle Versionsinformation dem aktuellen Betriebsprogramm und die zweite sequentielle Versionsinformation dem neuen Betriebsprogramm zugeordnet ist.

Eine sequentielle Versionsinformation, d.h. eine eindeutig in eine Reihenfolge einzuordnenden Versionsinformation, ist eine besonders einfache Möglichkeit, um die fehlersichere Freigabe oder Sperrung zu realisieren. Grundsätzlich werden Sicherheitssteuerungen vom Hersteller nämlich mit einem aufgespielten Betriebsprogramm ausgeliefert. Die Kombination von Hardwareplattform und aktuellem Betriebsprogramm unterliegt damit wie bisher der vollen Kontrolle des Herstellers im eigenen Betrieb. Mit Hilfe einer sequentiellen Versionsinformation kann der Hersteller dann auf einfache Weise gewährleisten, daß ein Anwender nur ein neueres Betriebsprogramm, d.h. ein Betriebsprogramm mit einer höheren sequentiellen Versionsinformation, aufspielen kann. Damit kann die ausgelieferte Sicherheitssteuerung vom Anwender unter keinen Umständen mit einem "älteren" Betriebsprogramm versehen werden. Der Großteil der ungeprüften und damit unzulässigen Kombinationen von Hardwareplattform und Betriebsprogramm ist damit wirkungsvoll und auf einfache Weise ausgeschlossen.

Für den Hersteller genügt es, daß er gegenüber den Aufsichtsbehörden nachweisen kann, daß eine neue Version des Betriebsprogramms mit einer entsprechend höheren Versionsinformation fehlersicher auf den bisher verwendeten Hardwareplattformen lauffähig ist. Der Aufwand hierfür läßt sich vergleichsweise gering halten, da eine neue Version eines Betriebsprogramms in aller Regel auf vorhergehenden Versionen aufbaut und dementsprechend nur einen begrenzten Umfang an Modifikationen beinhaltet.

Die theoretisch denkbare Möglichkeit, daß ein Anwender auf eine neue Sicherheitssteuerung ein in dieser Kombination nicht geprüftes, älteres Betriebsprogramm aufspielt, ist durch die fehlersichere Überprüfung der sequentiellen Versionsinformation ausgeschlossen.

In einer weiteren Ausgestaltung beinhaltet die Downloadeinrichtung einen Vergleicher zum Vergleich der ersten und zweiten Versionsinformationen sowie eine Freigabeeinrichtung, wobei die Freigabeeinrichtung das Aufspielen des neuen Betriebsprogramms in Abhängigkeit von dem Vergleicher fehlersicher unterbindet, wenn die sequentielle zweite Versionsinformation niedriger ist als die sequentielle erste Versionsinformation.

Diese Ausgestaltung ist eine besonders vorteilhafte Möglichkeit, um die sequentiellen Versionsinformationen automatisch und maschinell zum Freigeben oder Sperren der Übernahme auszuwerten. Es versteht sich dabei, daß der Vergleicher bzw. die Freigabeeinrichtung gleichermaßen als Hardwarebausteine oder als Software, d.h. innerhalb des aktuellen Betriebsprogramms realisiert sein können.

In einer weiteren Ausgestaltung gibt die Freigabeeinrichtung das Aufspielen des neuen Betriebsprogramms nur dann frei, wenn die sequentielle zweite Versionsinformation höher ist als die sequentielle erste Versionsinformation.

Anders ausgedrückt wird das Abspeichern des neuen Betriebsprogramms hiernach auch dann unterbunden, wenn die sequentielle zweite Versionsinformation gleich der sequentiellen ersten Versionsinformation ist.

In dieser Ausgestaltung wird zusätzlich zu dem bisher erläuterten Ansatz auch das erneute Aufspielen eines identischen Betriebsprogramms unterbunden. Ein Anreiz hierzu besteht beispielsweise dann, wenn der Anwender der Sicherheitssteuerung Funktionsstörungen feststellt, von denen er meint, daß sie durch erneutes Aufspielen des vorhandenen Betriebsprogramms beseitigt werden können. Häufig ist eine solche "Selbsthilfe" jedoch trügerisch. Aus Sicherheitsgründen ist es daher von Vorteil, wenn ein Anwender tatsächlich nur ein Betriebsprogramm mit einer höheren Versionsinformation selbständig auf seine Sicherheitssteuerung aufspielen kann.

In einer weiteren Ausgestaltung sind die erste und die zweite Versionsinformation in dem jeweiligen Betriebsprogramm fehlersicher abgesichert.

Eine fehlersichere Absicherung der Versionsinformation wird insbesondere durch eine redundante Abspeicherung und/oder eine an sich bekannte Signaturbildung, beispielsweise in Form einer CRC-Prüfsumme (cyclic redundancy check) erreicht. In dieser Ausgestaltung ist das Aufspielen eines neuen Betriebsprogramms noch zuverlässiger möglich, da ein unerwünschtes Aufspielen - eines neuen Betriebsprogramms selbst bei einem Fehler oder einer Manipulation an der Versionsinformation verhindert ist. Die Kontrolle des Herstellers der Sicherheitssteuerung ist nochmals verstärkt.

In einer weiteren Ausgestaltung beinhaltet zumindest das neue Betriebsprogramm Programmcode, der sicherheitstechnische Steuerregeln in der Sicherheitssteuerung implementiert, wenn das neue Betriebsprogramm in der Sicherheitssteuerung ausgeführt wird.

Durch diese Maßnahme läßt sich der gesamte Funktionsumfang der Sicherheitssteuerung in besonders vorteilhafter Weise modifizieren, ohne daß der Hersteller der Sicherheitssteuerung die Kontrolle verliert. Die Vorteile der Erfindung treten in dieser Ausgestaltung besonders deutlich hervor. Der Anwender hat hier die Möglichkeit, durch Aufspielen des neuen Betriebsprogramms die sicherheitstechnischen Steuerregeln zu verändern. Er ist jedoch darauf beschränkt, das vom Hersteller kontrollierte "Gesamtpaket" aller implementierten sicherheitstechnischen Steuerregeln auszutauschen. Er kann nicht die sicherheitstechnischen Steuerregeln selbst verändern oder manipulieren, was ein Sicherheitsrisiko bedeuten würde.

In einer weiteren Ausgestaltung beinhalten die erste und die zweite Hardwareinformation sequentielle Versionsinformationen.

Eine sequentielle Versionsinformation läßt, wie bereits erläutert, eine eindeutige Einordnung in einer Reihenfolge zu. Die Zulässigkeit der sich beim Anwender ergebenden Kombination von Hardwareplattform und Betriebsprogramm läßt sich damit besonders einfach und sicher kontrollieren.

In einer weiteren Ausgestaltung beinhalten die erste und die zweite Hardwareinformation jeweils eine Typeninformation.

Hierdurch kann die Überprüfung, ob eine zulässige Kombination von Hardwareplattform und Betriebsprogramm vorliegt, noch einfacher und zuverlässiger gestaltet werden. Mit Hilfe einer Typeninformation lassen sich verschiedene Baureihen und Hardwareplattformen so voneinander unterscheiden, daß das Aufspielen eines typfremden Betriebsprogramms unabhängig von der Versionsinformation verhindert ist. In Kombination mit einer sequentiellen Versionsinformation erhält man zudem eine doppelte Überprüfungsmöglichkeit, die eine zusätzliche Sicherheit bietet.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Sicherheitssteuerung und
- Fig. 2: ein Flußdiagramm zur Erläuterung des erfindungsgemä- ßen Verfahrens.

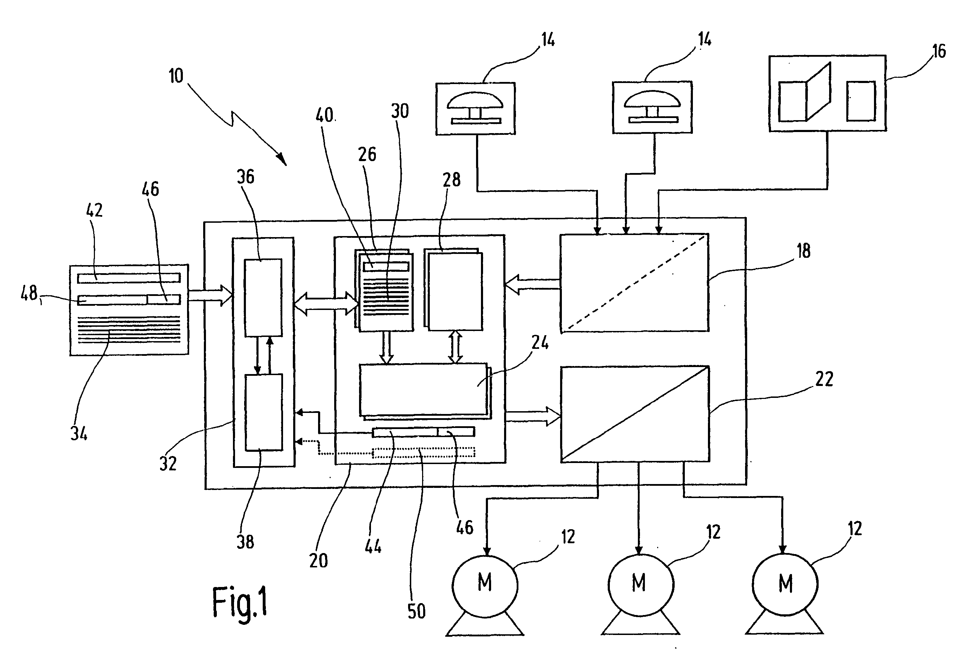

In Fig. 1 ist eine erfindungsgemäße Sicherheitssteuerung in ihrer Gesamtheit mit der Bezugsziffer 10 bezeichnet.

Die Sicherheitssteuerung 10 dient hier gemäß einem bevorzugten Ausführungsbeispiel der Erfindung zum sicheren Abschalten einer Maschinenanlage, insbesondere einer Maschinenanlage in einer industriellen Produktionsumgebung. Die Maschinenanlage ist hier beispielhaft durch drei elektrische Antriebe 12 dargestellt, die von der Sicherheitssteuerung 10 einzeln oder gemeinsam abgeschaltet werden können. Als Eingangssignale wertet die Sicherheitssteuerung 10 in diesem exemplarischen Anwendungsfall zwei Not-Aus-Schalter 14 sowie eine Schutztür 16 aus. Die Not-Aus-Schalter 14 und die Schutztür 16 sind in an sich bekannter Weise im Bereich der Maschinenanlage angeordnet, um deren Absicherung im Hinblick auf die Betriebssicherheit für Bedienpersonal zu gewährleisten.

Die Sicherheitssteuerung 10 ist im vorliegenden Ausführungsbeispiel als proprietäres Gerät allein für die Absicherung der Maschinenanlage verantwortlich, d.h. das gezielte Abschalten der Antriebe 12 bei Vorliegen eines entsprechenden Abschaltsignals von den Not-Aus-Schaltern 14 oder der Schutztür 16. Die Betriebssteuerung der Maschine, beispielsweise also das Beschleunigen und Abbremsen der Antriebe 12 im Arbeitsablauf ist hier nicht Aufgabe der Sicherheitssteuerung 10. Hierfür ist eine eigenständige, an sich bekannte Betriebssteuerung vorgesehen, die hier aus Gründen der Übersichtlichkeit nicht dargestellt ist. Alternativ kann die Sicherheitssteuerung 10 in anderen Ausführungsbeispielen jedoch auch zusätzlich die Betriebssteuerung der Maschinenanlage übernehmen. Es versteht sich, daß die Sicherheitssteuerung 10 in diesem Fall eine höhere Komplexität aufweist und über die gezeigten Eingangs- und Ausgangssignale hinaus weitere maschinentypische Steuersignale erhält und abgibt.

Es versteht sich ferner, daß über die hier gezeigten Signalgeber für die Eingangssignale, d.h. die Not-Aus-Schalter 14 und die Schutztür 16, beliebige andere Signalgeber am Eingang der Sicherheitssteuerung 10 angeschlossen sein können, wie beispielsweise Zwei-Hand-Taster, Stillstandswächter, Lichtschranken oder Positionsschalter. Die fehlersichere Auswertung dieser Signalgeber erfolgt in der Sicherheitssteuerung 10 in an sich bekannter Weise mit Hilfe des Betriebsprogramms und des Anwenderprogramms.

Ebenso können am Ausgang der Sicherheitssteuerung 10 andere elektrisch betätigte Verbraucher angeschlossen sein, die in Abhängigkeit von den Signalen am Eingang der Sicherheitssteuerung 10 fehlersicher abgeschaltet werden müssen.

Schließlich sei darauf hingewiesen, daß die Sicherheitssteuerung 10 hier vom Anwender in an sich bekannter Weise mit einem Anwenderprogramm programmiert werden kann. Beispielhaft sei auf die bereits eingangs genannte WO 98/44399 verwiesen. Die Vorteile der Erfindung kommen jedoch auch bei solchen Sicherheitssteuerungen zur Geltung, die vom Anwender nicht mit einem Anwenderprogramm programmiert werden können, sofern ein Betriebsprogramm im Sinne der vorherigen Erläuterungen vorhanden ist. Derartige Sicherheitssteuerungen werden von der Anmelderin der vorliegenden Erfindung beispielsweise unter der Produktfamilie PNOZelog^{™} vertrieben, wobei ein Austausch des Betriebsprogramms durch den Anwender bei diesen Geräten bislang nicht möglich war.

Die Sicherheitssteuerung 10 besitzt zum Aufnehmen der Prozeßgrößen von den Signalgebern, hier also den Not-Aus-Schaltern 14 und der Schutztür 16, ein Eingangsmodul 18. Das Eingangsmodul 18 ist in der Regel aus Gründen der erforderlichen Fehlersicherheit zweikanalig redundant aufgebaut, was in Fig. 1 mit der gestrichelten Linie dargestellt ist. In Einzelfällen kann es jedoch ausreichend sein, das Eingangsmodul 18 oder zumindest Teile davon einkanalig auszubilden. Ferner ist das Eingangsmodul in dem Blockschaltbild in Fig. 1 aus Gründen der Übersichtlichkeit als ein eigener Funktionsblock dargestellt. Es kann jedoch teilweise per Software realisiert sein und ist dann entsprechend in das Betriebsprogramm eingebettet.

Mit der Ziffer 20 ist ein Signalverarbeitungsmodul der Sicherheitssteuerung 10 bezeichnet. Es verknüpft in an sich bekannter Weise die vom Eingangsmodul 18 aufgenommenen Prozeßsignale und erzeugt daraus Steuersignale, die über ein Ausgangsmodul 22 ausgegeben werden. Häufig beinhaltet das Ausgangsmodul 22 Relais, Schütze oder auch elektronische Schalter, mit denen die elektrische Versorgung der Antriebe 12, allgemeiner der Maschinenanlage, fehlersicher abgeschaltet wird. Die Fehlersicherheit ist auch hier wiederum durch eine diagonale Linie symbolisiert, die auf eine entsprechend redundante Auslegung des Ausgangsmoduls 20 hinweist. Der Signalfluß vom Eingangsmodul 18 über das Signalverarbeitungsmodul 20 zum Ausgangsmodul 22 ist in Fig. 1 durch entsprechende Blockpfeile angedeutet.

Das Signalverarbeitungsmodul 20 beinhaltet zumindest einen programmierbaren Prozessor 24 sowie einen Festspeicher 26 und einen Arbeitsspeicher 28. Im Festspeicher 26 ist in an sich bekannter Weise das Betriebsprogramm 30 für den Prozessor 24 nicht-flüchtig abgespeichert. Hierbei handelt es sich um eine Summe von Programmbefehlen in maschinenlesbarer Form, die die Grundfunktionalität der Sicherheitssteuerung 10 ermöglicht. Insbesondere beinhaltet das Betriebsprogramm 30 in diesem Ausführungsbeispiel diejenigen Programmbefehle, mit denen der Prozessor 24 Signale einlesen und ausgeben kann. Mit diesen Programmbefehlen wird die Hardware der Sicherheitssteuerung 10 praktisch "zum Leben erweckt".

Darüber hinaus beinhaltet das Betriebsprogramm 30 hier einen vorbereiteten Satz von sicherheitstechnischen Steuerregeln, mit denen beispielsweise die fehlersichere Auswertung eines zweikanaligen Not-Aus-Schalters realisiert wird. Ebenso sind fehlersichere Auswertealgorithmen für sämtliche anderen zugelassenen Signalgeber und für alle zugelassenen Aktuatoren auf der Ausgangsseite der Sicherheitssteuerung 10 vorhanden.

In dem Fall, daß es sich bei der Sicherheitssteuerung 10 um ein proprietäres Gerät handelt, beinhaltet das Betriebsprogramm 30 ferner die Zuordnung der sicherheitstechnischen Steuerregeln zu den Ein- und Ausgangsanschlüssen. Der Anwender hat in diesem Fall keinen oder allenfalls einen sehr begrenzten Einfluß auf den Funktionsumfang. Wie erwähnt, kann die Sicherheitssteuerung 10 alternativ jedoch auch so realisiert sein, daß der Anwender mit Hilfe eines von ihm zu erstellenden Anwenderprogramms die Auswahl von sicherheitstechnischen Steuerregeln vornehmen und diese parametrieren kann.

Der Arbeitsspeicher 28 dient zum temporären Abspeichern von Zwischengrößen und gegebenenfalls zum Aufnehmen des Anwenderprogramms, das auf das Betriebsprogramm 30 aufsetzt.

Das Signalverarbeitungsmodul 20 der Sicherheitssteuerung 10 ist durchgehend eigenfehlersicher aufgebaut, was beispielsweise durch eine redundante Realisierung mit gegenseitigen Tests und Kontrollen geschehen kann. Andeutungsweise sind der Prozessor 24, der Festspeicher 26 und der Arbeitsspeicher 28 hier daher jeweils doppelt dargestellt.

Mit der Bezugsziffer 32 ist im Blockschaltbild eine Downloadeinrichtung zum Aufspielen eines neuen Betriebsprogramms 34 bezeichnet. "Aufspielen" bedeutet dabei, daß das neue Betriebsprogramm 34 so in dem Festspeicher 26 abgespeichert wird, daß es in Ergänzung und/oder alternativ zum ersten Betriebsprogramm 30 den Funktionsumfang der Sicherheitssteuerung 10 bestimmt. Das Aufspielen des neuen Betriebsprogramms 34 kann insbesondere beinhalten, daß das vorhandene Betriebsprogramm 30 vollständig ersetzt wird. Damit besteht unter anderem die Möglichkeit, die vorbereiteten sicherheitstechnischen Steuerregeln durch geänderte sicherheitstechnische Steuerregeln zu ersetzen.

Die Downloadeinrichtung 32 beinhaltet hier der Erfindung entsprechend einen Vergleicher 36 sowie eine Freigabeeinrichtung 38. Des weiteren ist sowohl im vorhandenen Betriebsprogramm 30 als auch im neuen Betriebsprogramm 34 eine sequentielle Versionsinformation vorgesehen, die in Fig. 1 mit den Bezugsziffern 40 bzw. 42 bezeichnet ist. Der Vergleicher 36 liest die Versionsinformation 40 des vorhandenen Betriebsprogramms 30 und die Versionsinformation 42 des neuen Betriebsprogramms 34 ein und vergleicht diese miteinander. In Abhängigkeit vom Ergebnis dieses Vergleichs sperrt die Freigabeeinrichtung 38 die Möglichkeit des Aufspielens des neuen Betriebsprogramms 34 oder sie gibt dies frei. Konkret wird mit Hilfe der Downloadeinrichtung 32 das Aufspielen des neuen Betriebsprogramms 34 nur dann ermöglicht, wenn die Versionsinformation des neuen Betriebsprogramms 34 höher ist als die Versionsinformation des vorhandenen Betriebsprogramms 30. Mit anderen Worten kann bei der Sicherheitssteuerung 10 ein neues Betriebsprogramm 34 nur dann aufgespielt werden, wenn es neuer ist als das vorhandene Betriebsprogramm 30, was durch Vergleich der Versionsinformationen festgestellt wird.

Es versteht sich, daß die Darstellung in Fig. 1 mit dem Vergleicher 36 und der Freigabeeinrichtung 38 in erster Linie aus anschaulichen Gründen gewählt wurde. In der praktischen Realisierung findet der Vergleich der Versionsinformationen sowie die Freigabe oder Sperrung des Aufspielens mit Hilfe von programmtechnischen Mitteln, d.h. mit Hilfe von entsprechenden Programmbefehlen statt, die als Teil des vorhandenen Betriebsprogramms 30 im Festspeicher 26 abgelegt sind und vom Prozessor 24 abgearbeitet werden. Hardwaretechnisch beinhaltet die Downloadeinrichtung 32 darüber hinaus eine an sich bekannte Schnittstelle, wie beispielsweise eine RS232-Schnittstelle, über die das neue Betriebsprogramm 34 bei entsprechender Freigabe eingelesen werden kann.

Entsprechend einem bevorzugten Ausführungsbeispiel der Erfindung sind die Versionsinformationen 40 und 42 der Betriebsprogramme 30 und 34 mehrfach redundant in den Betriebsprogrammen eingebettet und/oder durch Fehlersicherungsmaßnahmen, wie beispielsweise eine CRC-Prüfsumme oder eine andere Signaturbildung, abgesichert. Das Aufspielen des neuen Betriebsprogramms 34 wird von der Freigabeeinrichtung 38 nur dann freigegeben, wenn ein fehlersicherer Vergleich der beiden Versionsinformationen 40, 42 zweifelsfrei ergibt, daß die Versionsinformation des neuen Betriebsprogramms 34 höher ist als die Versionsinformation des vorhandenen Betriebsprogramms 30.

Entsprechend einem bevorzugten Ausführungsbeispiel ist in der Sicherheitssteuerung 10 ferner eine Hardwareinformation 44 abgespeichert, die zumindest für das Signalverarbeitungsmodul 20 charakteristisch ist. Mit anderen Worten gibt die Hardwareinformation 44 Aufschluß über den Entwicklungsstand der Hardwareplattform der Sicherheitssteuerung 10. Gemäß einem besonders bevorzugten Ausführungsbeispiel beinhaltet die Hardwareinformation auch eine Typeninformation 46, mit deren Hilfe verschiedene Hardwareplattformen genauer identifiziert werden können. Des weiteren ist im neuen Betriebsprogramm 34 eine zweite Hardwareinformation 48 vorgesehen, mit deren Hilfe die mindestens erforderlichen Hardwarevoraussetzungen identifiziert werden können. Bevorzugt handelt es sich bei den Hardwareinformationen 44, 48 wiederum um sequentielle Versionsinformationen, die eine eindeutige Einordnung der vorhandenen Hardwareplattform bzw. der erforderlichen Minimalvoraussetzungen in eine Entwicklungsreihenfolge ermöglichen.

In dem bevorzugten Ausführungsbeispiel werden bei der Überprüfung, ob das Aufspielen des neuen Betriebsprogramms 34 freigegeben wird oder nicht, auch die Hardwareinformationen 44, 46, 48 berücksichtigt. Insbesondere wird das Aufspielen des neuen Betriebsprogramms 34 nur dann freigegeben, wenn die im Betriebsprogramm 34 codierten Minimalanforderungen an die Hardwareplattform bei der Sicherheitssteuerung 10 aufgrund der abgespeicherten Hardwareinformationen 44, 46 zweifelsfrei vorliegen.

Entsprechend einem weiteren bevorzugten Ausführungsbeispiel ist bei der Sicherheitssteuerung 10 hier außerdem eine weitere Versionsinformation 50 nicht flüchtig abgespeichert, die die minimal zulässige Version für ein neues Betriebsprogramm 34 definiert. In diesem Ausführungsbeispiel wird die Freigabe für das Aufspielen eines neuen Betriebsprogramms 34 daher zusätzlich noch davon abhängig gemacht, daß die Versionsinformation 42 höher ist als die festgelegte minimale Versionsinformation 50. Durch dieses weitere Vergleichskriterium wird das Aufspielen des neuen Betriebsprogramms 34 von einer weiteren Kontrolle abhängig gemacht. Diese Kontrolle kann jedoch auch entfallen, wenn der Hersteller der Sicherheitssteuerung 10 gewährleistet, daß die Sicherheitssteuerung 10 stets nur mit einem Betriebsprogramm 30 ausgeliefert wird, indem eine Versionsinformation 40 enthalten ist. Eine Minimalanforderung an das neue Betriebsprogramm 34 ist dann dadurch sichergestellt, daß das neue Betriebsprogramm 34 nur mit einer höheren Versionsinformation als der vorhandenen aufgespielt werden kann.

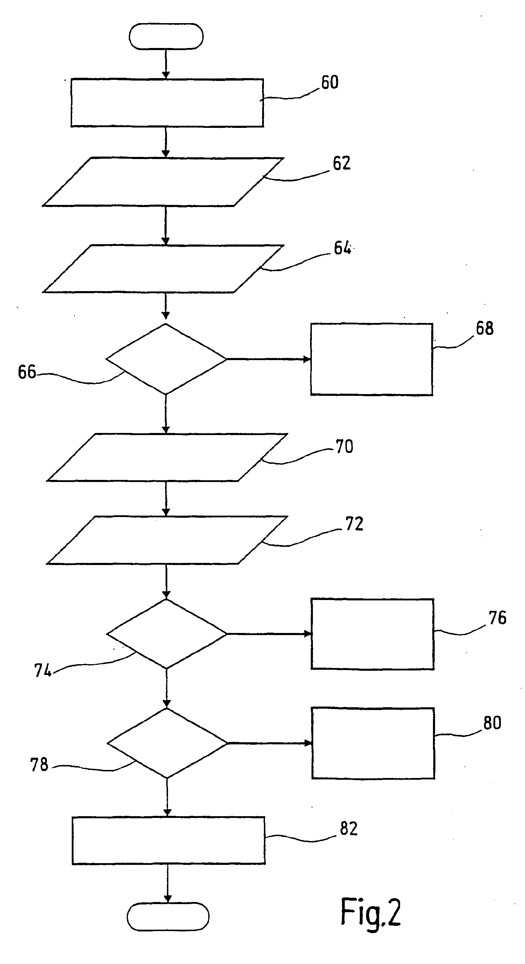

In Fig. 2 ist anhand eines Flußdiagramms schematisch dargestellt, wie das Aufspielen des neuen Betriebsprogramms 34 erfolgen kann. Es ist leicht nachzuvollziehen, daß das entsprechende Verfahren sehr gut in Form von geeignetem Programmcode für den Prozessor 24 realisiert werden kann.

In Schritt 60 wird zunächst ein Download-Modus aktiviert. Um eine Fehlbedienung und eine unbeabsichtigte Aktivierung zu verhindern, kann dies vorteilhafterweise dadurch erfolgen, daß ein für diesen Zweck extra vorgesehener Schlüsselschalter (hier nicht dargestellt) an der Sicherheitssteuerung 10 betätigt wird. Es ist jedoch auch möglich, den Download-Modus programmtechnisch durch Eingabe eines Paßworts oder dergleichen zu aktivieren.

Gemäß Schritt 62 erfolgt dann das Einlesen der aktuellen Versionsinformation 40 des vorhandenen Betriebsprogramms 30. Anschließend wird im Schritt 64 die Versionsinformation 42 des neuen Betriebsprogramms 34 eingelesen. Gemäß Schritt 66 erfolgt dann ein Vergleich der beiden Versionsinformationen 40, 42. Ist die Versionsinformation 40 des vorhandenen Betriebsprogramms 30 größer oder höher als die Versionsinformation 42 des neuen Betriebsprogramms 34, erfolgt gemäß Schritt 68 der Abbruch des Verfahrens und bevorzugt die Beendigung des Download-Modus. Das Aufspielen des neuen Betriebsprogramms 34 wird hierdurch zuverlässig verhindert.

Ergibt der Vergleich der beiden Versionsinformationen 40, 43, daß das neue Betriebsprogramm 34 das vorhandene Betriebsprogramm 30 zulässigerweise ergänzen oder ersetzen darf, wird gemäß Schritt 70 die Hardwareinformation 44, 46 der Sicherheitssteuerung 10 eingelesen. Im Schritt 72 wird anschließend die Hardwareinformation 48 eingelesen, die die minimalen Hardwarevoraussetzungen für die Lauffähigkeit und Zulässigkeit des neuen Betriebsprogramms 34 definiert. Gemäß Schritt 74 erfolgt in dem hier dargestellten, bevorzugten Ausführungsbeispiel zunächst ein Typenvergleich, d.h. es wird überprüft, ob das Betriebsprogramm 34 anhand der Typeninformation für den Betrieb auf der Sicherheitssteuerung 10 zugelassen ist. Ist dies nicht der Fall, erfolgt gemäß Schritt 76 wiederum der endgültige Abbruch des Download-Modus.

Ist der Typenvergleich hingegen ebenfalls positiv, wird in Schritt 78 als weiteres Kriterium überprüft, ob die Hardwareinformation 44 der Sicherheitssteuerung 10 größer oder zumindest gleich der minimalen Hardware-Information 48 ist, die im Betriebsprogramm 34 enthalten ist. Ergibt dieser Vergleich, daß die Sicherheitssteuerung 10 die minimalen Hardwarevoraussetzungen nicht erfüllt, wird der Download-Modus gemäß Schritt 80 wiederum abgebrochen.

Fällt hingegen auch die Überprüfung der Hardwarevoraussetzungen anhand der Hardwareinformationen positiv aus, erfolgt gemäß Schritt 82 das Aufspielen des Betriebsprogramms 34. Mit anderen Worten wird das Betriebsprogramm 34 dann in dem Festspeicher 26 abgespeichert. Nach Beendigung des Abspeicherns steht das neue Betriebsprogramm 34 anstelle oder in Ergänzung zum vorhandenen Betriebsprogramm 30 für den Betrieb der Sicherheitssteuerung 10 zur Verfügung.

Das Übertragen des neuen Betriebsprogramms 34 zu der Sicherheitssteuerung 10 kann auf unterschiedliche Weise erfolgen. Wie bereits oben erwähnt, kann das Betriebsprogramm 34 nach erfolgter Freigabe über eine serielle Schnittstelle an die Sicherheitssteuerung 10 übertragen werden. Ebenso ist es möglich, die Übertragung über einen Feldbus oder ein wechselbares Speichermedium vorzunehmen. Grundsätzlich ist sogar die Übertragung des neuen Betriebsprogramms 34 über das Internet möglich.

Zur weiteren Erhöhung der Fehlersicherheit ist es ferner vorteilhaft, wenn das Betriebsprogramm 34 und insbesondere die Versionsinformationen 42 und 48 durch einen an sich bekannten Verschlüsselungsalgorithmus gegen Manipulationen und Verfälschungen gesichert sind. In der Sicherheitssteuerung 1β ist dann ein entsprechendes Entschlüsselungsprogramm (hier nicht dargestellt) vorhanden.

In den bislang beschriebenen, bevorzugten Ausführungsbeispielen beinhalten die Versionsinformationen beispielsweise Zahlen-und/oder Buchstabenkombinationen, die eine eindeutige Einordnung in eine Reihenfolge ermöglichen. Alternativ hierzu ist es jedoch auch möglich, die Versionsinformationen nicht in "fertiger Form" bereitzustellen, sondern in Form eines Algorithmus, der ein eindeutiges Ergebnis liefert und somit die endgültige Bestimmung der sequentiellen Versionsinformation erst ermöglicht. Auch dies ist eine sequentielle Versionsinformation im Sinne der vorliegenden Erfindung.

## Patentansprüche

1. Sicherheitssteuerung zum fehlersicheren Steuern von sicherheitskritischen Prozessen, insbesondere zum fehlersicheren Abschalten einer Maschine (12) oder Maschinenanlage, mit einem Eingangsmodul (18) zum automatischen Einlesen von Prozeßsignalen, mit einem fehlersicheren Signalverarbeitungsmodul (20) zum automatischen Verarbeiten der Prozeßsignale und mit einem fehlersicheren Ausgangsmodul (22), das in Abhängigkeit von dem Signalverarbeitungsmodul (20) Steuersignale erzeugt, wobei das Signalverarbeitungsmodul (20) zumindest einen programmierbaren Prozessor (24) und zumindest einen ersten Festspeicher (26) beinhaltet, in dem ein aktuelles Betriebsprogramm (30) für den Prozessor (24) nicht-flüchtig abgespeichert ist, **gekennzeichnet durch** eine Downloadeinrichtung (32) zum Übernehmen eines neuen Betriebsprogramms (34) und einen zweiten Festspeicher, in dem eine erste Hardwareinformation (44) abgespeichert ist, die zumindest für das Signalverarbeitungsmodul (20) charakteristisch ist, wobei das neue Betriebsprogramm (34) eine zweite Hardwareinformation (48) beinhaltet, die für eine minimal erforderliche Hardwarekonfiguration charakteristisch ist, und wobei die Downloadeinrichtung (32) die Übernahme des neuen Betriebsprogramms (34) in Abhängigkeit von einer Freigabeinformation (40, 42, 44, 48), die die erste und zweite Hardwareinformation beinhaltet, fehlersicher freigibt oder unterbindet.

2. Sicherheitssteuerung nach Anspruch 1, **dadurch gekennzeichnet, daß** die Freigabeinformation (40, 42, 44, 48) zumindest teilweise in dem neuen Betriebsprogramm (34) maschinenlesbar integriert ist.

3. Sicherheitssteuerung nach Anspruch 1 oder 2, **dadurch gekennzeichnet, daß** die Freigabeinformation (40, 42, 44, 48) eine erste (40) und eine zweite (42) sequentielle Versionsinformation beinhaltet, wobei die erste sequentielle Versionsinformation (40) dem aktuellen Betriebsprogramm (30) und die zweite sequentielle Versionsinformation (42) dem neuen Betriebsprogramm (34) zugeordnet ist.

4. Sicherheitssteuerung nach Anspruch 3, **dadurch gekennzeichnet, daß** die Downloadeinrichtung (32) einen Vergleicher (36) zum Vergleich der ersten und zweiten Versionsinformationen (40, 42) sowie eine Freigabeeinrichtung (38) beinhaltet, wobei die Freigabeeinrichtung (38) das Aufspielen des neuen Betriebsprogramms (34) in Abhängigkeit von dem Vergleicher (36) fehlersicher unterbindet, wenn die sequentielle zweite Versionsinformation (42) niedriger ist als die sequentielle erste Versionsinformation (40).

5. Sicherheitssteuerung nach Anspruch 4, **dadurch gekennzeichnet, daß** die Freigabeeinrichtung (38) das Aufspielen des neuen Betriebsprogramms (34) nur dann freigibt, wenn die sequentielle zweite Versionsinformation (42) höher ist als die sequentielle erste Versionsinformation (40).

6. Sicherheitssteuerung nach einem der Ansprüche 3 bis 5, **dadurch gekennzeichnet, daß** die erste und die zweite Versionsinformation (40, 42, 44, 48) in dem jeweiligen Betriebsprogramm (30, 34) fehlersicher abgesichert sind.

7. Sicherheitssteuerung nach einem der Ansprüche 1 bis 6, **dadurch gekennzeichnet, daß** zumindest das neue Betriebsprogramm (42) Programmcode beinhaltet, der sicherheitstechnische Steuerregeln in der Sicherheitssteuerung (10) implementiert, wenn das neue Betriebsprogramm (42) in der Sicherheitssteuerung (10) ausgeführt wird.

8. Sicherheitssteuerung nach einem der Ansprüche 1 bis 7, **dadurch gekennzeichnet, daß** die erste und die zweite Hardwareinformation (44, 48) sequentielle Hardware-Versionsinformationen beinhalten.

9. Sicherheitssteuerung nach einem der Ansprüche 1 bis 8, **dadurch gekennzeichnet, daß** die erste und die zweite Hardwareinformation (44, 48) eine Hardware-Typeninformation (46) beinhalten.

10. Verfahren zum Aufspielen eines neuen Betriebsprogramms auf eine Sicherheitssteuerung nach einem der Ansprüche 1 bis 9, mit den Schritten:
- Bereitstellen der Sicherheitssteuerung (10) mit einem ersten Festspeicher (26), in dem ein aktuelles Betriebsprogramm (30) abgespeichert ist,
- Bereitstellen einer für die Sicherheitssteuerung (10) charakteristischen ersten Hardwareinformation (44) in einem zweiten Festspeicher der Sicherheitssteuerung (10),
- Bereitstellen eines neuen Betriebsprogramms (34),
- Bereitstellen einer zweiten Hardwareinformation (48) in dem neuen Betriebsprogramm (34), wobei die zweite Hardwareinformation (48) für eine minimal erforderliche Hardwareanforderung an das neue Betriebsprogramm (34) charakteristisch ist, und
- Übernehmen des neuen Betriebsprogramms (34) in den ersten Festwertspeicher (26) in Abhängigkeit von einer Freigabeinformation (40, 42, 44, 48), die die erste und zweite Hardwareinformation beinhaltet.

11. Verfahren nach Anspruch 10, **dadurch gekennzeichnet, daß** die Freigabeinformation (40, 42, 44, 48) ferner eine erste (40) und eine zweite (42) sequentielle Versionsinformation beinhaltet, wobei die erste sequentielle Versionsinformation (40) dem aktuellen Betriebsprogramm (30) und die zweite sequentielle Versionsinformation (42) dem neuen Betriebsprogramm (34) zugeordnet ist.

12. Verfahren nach Anspruch 11, **dadurch gekennzeichnet, daß** das Übernehmen unterbunden wird, wenn die sequentielle zweite Versionsinformation (42) niedriger ist als die sequentielle erste Versionsinformation (40).

13. Betriebsprogramm (34) zum Aufspielen auf eine Sicherheitssteuerung (10) gemäß dem Verfahren nach einem der Ansprüche 10 bis 12, **gekennzeichnet durch** eine integrierte Freigabeinformation (42, 48), die zumindest die zweite Hardwareinformation (48) beinhaltet, die für eine minimal erforderliche Hardwarekonfiguration der Sicherheitssteuerung (10) charakteristisch ist, wobei die zweite Hardwareinformation (48) dazu vorgesehen ist, das Aufspielen des Betriebsprogramms auf die Sicherheitssteuerung (10) in Abhängigkeit von einem Vergleich mit einer in der Sicherheitssteuerung (10) vorgesehenen ersten Hardwareinformation (44) fehlersicher freizugeben oder zu unterbinden.

14. Betriebsprogramm nach Anspruch 13, **gekennzeichnet durch** Programmcode, der sicherheitstechnische Steuerregeln in der Sicherheitssteuerung (10) implementiert, wenn das Betriebsprogramm (34) in einem Signalverarbeitungsmodul (20) der Sicherheitssteuerung (10) ausgeführt wird.

15. Betriebsprogramm nach Anspruch 13 oder 14, **dadurch gekennzeichnet, daß** die Freigabeinformation (42, 48) in dem Betriebsprogramm (34) fehlersicher abgesichert ist.

16. Datenträger, auf dem ein Betriebsprogramm (34) nach einem der Ansprüche 13 bis 15 codiert ist.

## Claims

1. A safety controller for failsafe control of safety-critical processes, in particular for failsafe disconnection of a machine (12) or machine system, having an input module (18) for automatically reading process signals, having a failsafe signal processing module (20) for automatically processing the process signals, and having a failsafe output module (22) which produces control signals as a function of the signal processing module (20), with the signal processing module (20) comprising at least one programmable processor (24) and at least a first permanent memory (26) in which a current operating program (30) for the processor (24) is stored in a non-volatile form, **characterized by** a download device (32) for transferring a new operating program (34) and a second permanent memory in which a first hardware information item (44) is stored which is characteristic at least of the signal processing module (20), with the new operating program (34) comprising a second hardware information item (48) which is characteristic of the minimum required hardware configuration, and with the download device (32) enabling or inhibiting the transfer of the new operating program (34) in a failsafe manner as a function of enabling information (40, 42, 44, 48) which contains the first and second hardware information items.

2. The safety controller of claim 1, **characterized in that** the enabling information (40, 42, 44, 48) is at least partially integrated in the new operating program (34) in a machine-legible form.

3. The safety controller of claim 1 or 2, **characterized in that** the enabling information (40, 42, 44, 48) comprises a first (40) and a second (42) item of a sequential version information, with the first sequential version information item (40) being associated with the current operating program (30), and the second sequential version information item (42) being associated with the new operating program (34).

4. The safety controller of claim 3, **characterized in that** the download device (32) comprises a comparator (36) for comparing the first and second version information items (40, 42), and comprises an enabling device (38), with the enabling device (38) inhibiting the loading of the new operating program (34) in a failsafe manner as a function of the comparator (36) when the sequential second version information item (42) is lower than the sequential first version information item (40).

5. The safety controller of claim 4, **characterized in that** the enabling device (38) enables the loading of the new operating program (34) only when the sequential second version information item (42) is higher than the sequential first version information item (40).

6. The safety controller of anyone of claims 3 to 5, **characterized in that** the first and the second version information items (40, 42, 44, 48) are stored in a failsafe manner in the respective operating program (30, 34).

7. The safety controller of anyone of claims 1 to 6, **characterized in that** at least the new operating program (42) comprises program code which implements safety control rules in the safety controller (10) when the new operating program (42) is run on the safety controller (10).

8. The safety controller of anyone of claims 1 to 7, **characterized in that** the first and the second hardware information items (44, 48) comprise items of a sequential hardware version information.

9. The safety controller of anyone of claims 1 to 8, **characterized in that** the first and the second hardware information items (44, 48) comprise hardware type information (46).

10. A method for loading a new operating program onto a safety controller according to anyone of claims 1 to 9, having the following steps:
- providing the safety controller (10) with a first permanent memory (26) in which a current operating program (30) is stored,
- providing a first hardware information item (44), which is characteristic of the safety controller (10), in a second permanent memory in the safety controller (10),
- providing a new operating program (34),
- providing a second hardware information item (48) in the new operating program (34), with the second hardware information item (48) being characteristic of the minimum required hardware requirement for the new operating program (34), and
- transferring the new operating program (34) to the first permanent memory (26) as a function of enabling information (40, 42, 44, 48) which contains the first and second hardware information items.

11. The method of claim 10, **characterized in that** the enabling information (40, 42, 44, 48) further comprises a first (40) and a second (42) item of a sequential version information, with the first sequential version information item (40) being associated with the current operating program (30), and the second sequential version information item (42) being associated with the new operating program (34).

12. The method of claim 11, **characterized in that** the transfer is inhibited when the sequential second version information item (42) is lower than the sequential first version information item (40).

13. An operating program (34) for loading onto a safety controller (10) in accordance with the method of anyone of claims 10 to 12, **characterized by** an integrated enabling information (42, 48) which contains at least the second hardware information item (48) which is characteristic of the minimum required hardware configuration for the safety controller (10), wherein the second hardware information item (48) is configured to failsafely enable or inhibit the transfer of the operating program to the safety controller (10) as a function of a comparison with a first hardware information item (44) provided in the safety controller (10).

14. The operating program of claim 13, **characterized by** program code which implements safety control rules in the safety controller (10) when the operating program (34) is run in a signal processing module (20) in the safety controller (10).

15. The operating program of claim 13 or 14, **characterized in that** the enabling information (42, 48) is stored in a failsafe manner in the operating program (34).

16. A data storage medium on which an operating program (34) of anyone of claims 13 to 15 is coded.

## Revendications

1. Système de commande de sécurité servant à commander, sans erreur, des processus critiques en termes de sécurité, en particulier servant à mettre à l'arrêt, sans erreur, une machine (12) ou une machinerie, avec un module d'entrée (18) permettant la lecture automatique de signaux de processus, avec un module de traitement de signaux sans erreur (20) permettant le traitement automatique des signaux de processus et avec un module de sortie sans erreur (22) qui produit des signaux de commande en fonction du module de traitement de signaux (20), le module de traitement de signaux (20) comportant au moins un processeur programmable (24) et au moins une première mémoire morte (26), dans laquelle un programme d'exploitation actuel (30) pour le processeur (24) est stocké de manière non-volatile, **caractérisé par** un dispositif de téléchargement (32) servant à accepter un nouveau programme d'exploitation (34) et une seconde mémoire morte, dans laquelle une première information de matériel (44) est stockée, laquelle est spécifique au moins au module de traitement de signaux (20), le nouveau programme d'exploitation (34) comportant une seconde information de matériel (48), laquelle est spécifique à une configuration de matériel requise au minimum, et le dispositif de téléchargement (32) empêchant ou débloquant, sans erreur, l'acceptation du nouveau programme d'exploitation (34) en fonction d'une information de déblocage (40, 42, 44, 48) qui comprend la première et la seconde information de matériel.

2. Système de commande de sécurité selon la revendication 1, **caractérisé en ce que** l'information de déblocage (40, 42, 44, 48) est intégrée au moins partiellement dans le nouveau programme d'exploitation (34) de manière exploitable par une machine.

3. Système de commande de sécurité selon la revendication 1 ou 2, **caractérisé en ce que** l'information de déblocage (40, 42, 44, 48) comporte une première (40) et une seconde (42) information de version séquentielle, la première information de version séquentielle (40) étant attribuée au programme d'exploitation actuel (30) et la seconde information de version séquentielle (42) étant attribuée au nouveau programme d'exploitation (34).

4. Système de commande de sécurité selon la revendication 3, **caractérisé en ce que** le dispositif de téléchargement (32) comporte un comparateur (36) pour comparer les première et seconde informations de version (40, 42), ainsi qu'un dispositif de déblocage (38), le dispositif de déblocage (38) empêchant, sans erreur, le téléchargement du nouveau programme d'exploitation (34) en fonction du comparateur (36), lorsque la seconde information de version séquentielle (42) est inférieure à la première information de version séquentielle (40).

5. Système de commande de sécurité selon la revendication 4, **caractérisé en ce que** le dispositif de déblocage (38) débloque le téléchargement du nouveau programme d'exploitation (34) uniquement lorsque la seconde information de version séquentielle (42) est supérieure à la première information de version séquentielle (40).

6. Système de commande de sécurité selon l'une quelconque des revendications 3 à 5, **caractérisé en ce que** la première et la seconde information de version (40, 42, 44, 48) sont sauvegardées, sans erreur, dans le programme d'exploitation respectif (30, 34).

7. Système de commande de sécurité selon l'une quelconque des revendications 1 à 6, **caractérisé en ce qu'**au moins le nouveau programme d'exploitation (42) comprend un code de programme qui implémente des règles de commande en matière de sécurité dans le système de commande de sécurité (10), lorsque le nouveau programme d'exploitation (42) est exécuté dans le système de commande de sécurité (10).

8. Système de commande de sécurité selon l'une quelconque des revendications 1 à 7, **caractérisé en ce que** la première et la seconde information de matériel (44, 48) comportent des informations de version de matériel séquentielles.

9. Système de commande de sécurité selon l'une quelconque des revendications 1 à 8, **caractérisé en ce que** la première et la seconde information de matériel (44, 48) comportent une information de type de matériel (46).

10. Procédé permettant le téléchargement d'un nouveau programme d'exploitation vers un système de commande de sécurité selon l'une quelconque des revendications 1 à 9, avec les étapes consistant à :
- fournir le système de commande de sécurité (10) avec une première mémoire morte (26), dans laquelle un programme d'exploitation actuel (30) est stocké,
- fournir une première information de matériel (44) spécifique au système de commande de sécurité (10) dans une seconde mémoire morte du système de commande de sécurité (10),
- fournir un nouveau programme d'exploitation (34),
- fournir une seconde information de matériel (48) dans le nouveau programme d'exploitation (34), la seconde information de matériel (48) étant spécifique à une demande de matériel requise au minimum au niveau du nouveau programme d'exploitation (34), et
- accepter le nouveau programme d'exploitation (34) dans la première mémoire morte (26) en fonction d'une première information de déblocage (40, 42, 44, 48) qui comporte la première et la seconde information de matériel.

11. Procédé selon la revendication 10, **caractérisé en ce que** l'information de déblocage (40, 42, 44, 48) comporte en outre une première (40) et une seconde (42) information de version séquentielle, la première information de version séquentielle (40) étant attribuée au programme d'exploitation actuel (30) et la seconde information de version séquentielle (42) étant attribuée au nouveau programme d'exploitation (34).

12. Procédé selon la revendication 11, **caractérisé en ce que** l'acceptation est bloquée lorsque la seconde information de version séquentielle (42) est inférieure à la première information de version séquentielle (40).

13. Programme d'exploitation (34) pour le téléchargement vers un système de commande de sécurité (10) d'après le procédé selon l'une quelconque des revendications 10 à 12, **caractérisé par** une information de déblocage intégrée (42, 48) qui comprend au moins la seconde information de matériel (48), laquelle est spécifique à une configuration de matériel du système de commande de sécurité (10) requise au minimum, la seconde information de matériel (48) étant prévue pour empêcher ou débloquer, sans erreur, le téléchargement du programme d'exploitation vers le système de commande de sécurité (10) en fonction d'une comparaison avec une première information de matériel (44) prévue dans le système de commande de sécurité (10).

14. Programme d'exploitation selon la revendication 13, **caractérisé par** un code de programme qui implémente des règles de commande en matière de sécurité dans le système de commande de sécurité (10), lorsque le nouveau programme d'exploitation (34) est exécuté dans un module de traitement de signaux (20) du système de commande de sécurité (10).

15. Programme d'exploitation selon la revendication 13 ou 14, **caractérisé en ce que** l'information de déblocage (42, 48) est sauvegardée, sans erreur, dans le programme d'exploitation (34).

16. Support de données, sur lequel est encodé un programme d'exploitation (34) selon l'une quelconque des revendications 13 à 15.
